# FASCICULE DE BREVET EUROPEEN

(11) **EP 0 378 462 B1**
(45) Date de publication et mention de la délivrance du brevet: **24.01.1996**
(21) Numéro de dépôt: 90400046.0
(22) Date de dépôt: 08.01.1990
(51) Int. Cl.: C03C 27/04

(54) **Vitrage encapsulé prêt à être monté et procédé de fabrication**
Eingekapselte Verglasung zur Montage und Verfahren zur Herstellung
Encapsulated glazing ready for mounting, and process for its manufacture

(30) Priorité: 12.01.1989 FR 8900290
(43) Date de publication de la demande: 18.07.1990
(73) Titulaire: SAINT-GOBAIN VITRAGE, F-92400 Courbevoie (FR)
(72) Inventeur: Bravet, Jean-Louis, F-60150 Thourotte (FR); Daude, Gérard, F-33140 Villenave D'Ornon (FR)
(74) Mandataire: Muller, René

(56) Documents cités:
- US-A- 2 903 380
- PATENT ABSTRACTS OF JAPAN, vol. 12, no. 40 (C-474)[2887], 05 février 1988
- PATENT ABSTRACTS OF JAPAN, vol. 11, no. 246 (C-439)[2693], 11 août 1987
- G. HABENICHT, "Kleben", Springer Verlag, DE, 1986; pp. 73-74
- ADHESION & ADHESIVES, 2ème ed., vol. 2, Elsevier Publ., Amsterdam (NL); pp. 94-98

## Description

L'invention concerne un vitrage encapsulé prêt à être monté par collage dans une baie de carrosserie.

Le montage des vitrages pour véhicules à moteur par collage dans la baie de carrosserie présente plusieurs avantages et notamment : il permet le maintien du vitrage dans la baie de carrosserie en cas de choc violent, il peut être automatisé, il autorise un montage affleurant du vitrage à la carrosserie, ce qui réduit le coefficient de pénétration du véhicule dans l'air.

Dans le cas du montage d'un vitrage monolithique ou feuilleté sans profil de surmoulage, le collage du vitrage dans la baie de carrosserie est réalisé par dépôt d'un cordon adhésif convenable sur une bordure émaillée prévue sur la périphérie de la face du vitrage orientée vers l'habitacle. Cette bordure émaillée est destinée notamment à protéger l'adhésif des rayonnements UV qui risquent d'en altérer les propriétés et elle a aussi un rôle esthétique en cachant à la vue un joint de colle inesthétique.

Dans le cas d'un vitrage encapsulé, c'est-à-dire d'un vitrage muni d'un profil périphérique surmoulé (ou joint d'encapsulation) destiné notamment à remplacer le joint de finition, le montage du vitrage par collage peut être réalisé comme pour les vitrages précédents, par collage sur le verre ou une bordure émaillée en limite du profil surmoulé. Dans une variante, le collage peut se faire directement sur le profil surmoulé. Mais dans cette variante, le collage obtenu avec les joints de colle connus n'est pas satisfaisant, les forces d'adhésion étant généralement insuffisantes ou ne se conservant pas dans le temps.

Cette mauvaise adhésion est sans doute due, notamment, à la présence sur le profil surmoulé d'un reste du produit démoulant que l'on utilise généralement lors de la fabrication d'un joint d'encapsulation RIM (moulage par injection réactive) dans le but d'éviter le collage du profil surmoulé avec le moule au cours de sa fabrication. Lorsque le vitrage encapsulé est retiré du moule, il reste du produit démoulant sur le profil et même un nettoyage avec différents types de solvants ne permet pas d'obtenir des caractéristiques de collage suffisantes.

L'invention propose un procédé de fabrication d'un vitrage encapsulé prêt à la pose qui présente une aptitude au collage répondant aux normes de sécurité des vitrages.

Ce procédé se caractérise en ce qu'après la fabrication du profil surmoulé sur le vitrage, au moins la face du profil destinée à être collée est traitée à l'aide d'une composition réactive comprenant des monomères, prépolymères ou résine(s) formant, après polymérisation au moins partielle, sur ladite face couche comportant des groupes OH libres stables susceptibles de réagir ultérieurement avec le cordon adhésif utilisé pour le montage par collage du vitrage dans la baie.

L'invention concerne également le vitrage obtenu selon le procédé précédent, ce vitrage étant un vitrage monolithique ou feuilleté comportant sur sa périphérie un profil surmoulé (ou joint d'encapsulation) dont une face est destinée à être collée dans une baie de carrosserie, telle une baie de carrosserie de véhicule à moteur par exemple, par l'intermédiaire d'un cordon adhésif, ladite face étant réactive en présentant des groupes OH libres, susceptibles de réagir ultérieurement avec le cordon adhésif utilisé pour le montage du vitrage dans la baie. L'invention concerne en particulier un vitrage muni d'un profil surmoulé à base d'un polyuréthane. Ce profil surmoulé peut être obtenu par RIM ou par injection thermoplastique.

Sous un des aspects de l'invention, la face est rendue réactive par un traitement, après le surmoulage, à l'aide d'une composition de traitement comprenant essentiellement des composants susceptibles de former une couche à groupes OH libres.

La composition de traitement peut comprendre les composants de base pour former un polyuréthane à groupes OH libres, le composant polyol étant pris en excès, en terme d'équivalents par rapport au composant isocyanate, le rapport des groupes NCO aux groupes OH étant inférieur à 1, et de préférence compris entre 0,3 et 0,99.

Dans une variante, la composition du traitement peut être une composition comprenant une résine époxyde à deux composants.

Dans une autre variante, la composition de traitement peut être à base d'une résine polyoxasolidone obtenue par condensation d'un isocyanate sur une résine époxyde en excès, en présence d'un catalyseur de type sels d'ammonium quaternaire.

Le composant isocyanate peut être choisi parmi les isocyanates difonctionnels aliphatiques ou aromatiques tels que l'hexaméthylènediisocyanate, le 2,2,4-triméthyl-1,6-hexaméthylènediisocyanate, le bis (4-isocyanatocyclo hexyl)méthane,l'isocyanato 1, 3-isocyanatométhyl-3,5,5-triméthylcyclohexane (IPDI), le toluylène diisocyanate (TDI), les isocyanates de fonctionnalité supérieure à 2, tels les biurets d'isocyanate, les isocyanurates, le diisocyanatodiphényl-méthane partiellement polymérisé et de fonctionnalité comprise entre 2 et 3, etc...

Le composant polyol peut être formé d'au moins un polyol choisi parmi les polyols longs de masse moléculaire comprise entre 400 et 4000 environ tels que les polyétherdiols, polyesterdiols, polycaprolactonediols.

Avantageusement, le composant polyol comprend au moins un polyol long comme cité ci-dessus et au moins un diol de masse moléculaire inférieure, choisi parmi ceux utilisés généralement en tant qu'allongeur de chaîne dans la préparation des polyuréthanes : on peut citer par exemple les : éthylèneglycol,propanediol-1,2,propanediol-1,3,butanediol-1,2,-1,3,-1,4, diméthyl-2,2 propanediol-1,3 (néopentyl glycol), pentanediol-1,5,hexanediol-1,6, octanediol-1,8, décanediol, 1,10, dodécanediol-1,12,cyclohexanediméthanol, bisphénol A, méthyl-2-pentanediol- 2,4,méthyl-3 pentane diol-2,4, éthyl-2-hexanediol-1,3, triméthyl-2,2,4-pentane diol-1,3,diéthylèneglycol, triéthylèneglycol,tétraéthylène glycol,butyne-2-diol-1,4,butènediol-1,4 et décynediol substitués et/ou éthérifiés,hydroquinone-bis-hydroxyéthyléther, bisphénol A éthérifiés par deux ou quatre groupes d'oxyde de propylène, acide diméthylolpropionique.

Le composant polyol peut être formé encore d'un polyol de fonctionnalité supérieure à deux, tels des triols aliphatiques monomères comme le glycérol, le triméthylolpropane, des triols à chaînes polyéther, des triols de polycaprolactone, la masse moléculaire de ces triols étant généralement comprise entre 90 et 1000, des polyols mixtes polyéther/polyester de fonctionnalité supérieure à 2, par exemple de fonctionnalité comprise entre 2 et 3.

Le polyol de fonctionalité supérieure à 2 peut être utilisé seul, notamment lorsque sa masse moléculaire est supérieure à environ 400. Dans une variante, il peut être utilisé en mélange avec au moins un polyol long difonctionnel et/ou avec au moins un diol court.

Une des caractéristiques essentielles de l'invention est l'excès de groupes OH de la composition de traitement. Ces groupes OH en excès doivent être stables, c'est-à-dire qu'ils doivent demeurer réactifs pendant un stockage, même prolongé pour pouvoir réagir ultérieurement avec des groupes NCO libres du joint adhésif, généralement un joint en polyuréthane qui au moment de la pose n'est pas entièrement polymérisé.

L'invention concerne également un procédé de fabrication d'un vitrage surmoulé présentant une aptitude au collage améliorée pour un montage par collage dans une baie de carrosserie.

Le procédé selon l'invention consiste à traiter au moins la face du joint de surmoulage destinée à recevoir le cordon de collage à l'aide d'une composition apte à procurer à ladite face des groupes OH libres susceptibles de réagir avec le joint de collage lors du montage du vitrage dans la baie de carrosserie. A cette fin, on dépose sur ladite face une composition d'un mélange réactif comprenant des groupes OH en excès, et on polymérise au moins partiellement la couche déposée. Le mélange réactif appliqué peut comprendre des monomères ou des prépolymères aptes à former un polyuréthane avec des groupes OH libres après polymérisation. Le mélange réactif peut dans une variante comprendre une résine époxyde à deux composants. Le mélange réactif peut être appliqué sous forme d'une solution dans un solvant afin d'en faciliter l'application.

La polymérisation peut être réalisée par un traitement thermique à température élevée et de courte durée, par exemple à une température d'environ 80 à 120°C pendant une durée de l'ordre de 1 à quelques minutes. Elle peut aussi être réalisée à la température dite ambiante, c'est-à-dire d'environ 20 à 25°C pendant une durée beaucoup plus longue, par exemple 24 heures. Entre ces deux types de polymérisation, on peut également envisager tout autre cycle de polymérisation thermique. L'avantage d'une polymérisation rapide réside essentiellement dans une plus grande facilité de manipulation du vitrage traité. On peut aussi utiliser le cas échéant d'autres types de polymérisation, par exemple par micro-ondes, par catalyse en phase vapeur, par rayonnement, etc...

Dans une forme préférée de l'invention, on procède à un prétraitement de la face à traiter du profil surmoulé.

Ce prétraitement peut s'effectuer en une ou plusieurs fois à l'aide d'un solvant et il a pour but notamment d'éliminer, au moins partiellement de ladite face, le produit démoulant utilisé au cours du procédé de moulage du joint. Le solvant utilisé pour le prétraitement peut être choisi notamment parmi les solvants chlorés, l'essence de térébenthine, le white spirit, le pentane, le tétrahydrofurane (THF), etc..., seul ou en mélange. De préférence, on utilise des solvants chlorés, tels que le dichlorométhane, le trichloro-1,1,1- éthane.

D'autres caractéristiques et avantages de l'invention apparaîtront dans la description suivante d'exemples de vitrages et de traitements conformes à l'invention.

### EXEMPLE 1

On fabrique un vitrage encapsulé pour véhicule automobile, par exemple un vitrage de custode, par le procédé de moulage par injection réactive (procédé connu sous l'appellation RIM), c'est-à-dire un procédé dans lequel la matière de surmoulage injectée est un mélange réactionnel qui réagit et durcit dans le moule. Le produit utilisé est par exemple un mélange de composants aptes à former un profil ou joint en polyuréthane. A cette fin,le vitrage en verre est placé dans un moule dont la partie correspondant au profil à former est préalablement revêtue d'un agent démoulant, à savoir une cire de polyéthylène. Après fabrication du profil surmoulé sur le vitrage, le vitrage encapsulé est démoulé et on traite la surface du joint surmoulé, au moins la face destinée a être collée par l'intermédiaire du cordon de colle dans la baie de carrosserie, à l'aide de trichloro-1,1,1-éthane.

Après un séchage de quelques minutes à la température ambiante, on applique à l'aide d'un feutre sur la face nettoyée et séchée, une composition préparée au préalable par un mélange d'un composant isocyanate : le méthylène diphényldiisocyanate partiellement polymérisé et présentant une fonctionnalité comprise entre 2 et 3, un composant polyol comprenant du polypropylèneglycol de masse moléculaire 440 et du butanediol-1,4.

Les composants sont pris en quantités telles qu'à 0,8 équivalent d'isocyanate correspond 1 équivalent OH dont 0,3 équivalent apporté par le polypropylèneglycol et 0,7 équivalent OH apportés par le butanediol 1,4.

Pour fabriquer cette composition réactionnelle, on mélange 32,7 g de polypropylèneglycol avec 15,3 g de butanediol-1,4. On ajoute de la méthyléthylcétone pour avoir une concentration finale en polyuréthane de 20 % environ. La concentration dépend de l'épaisseur que l'on désire déposer sur la face du joint de surmoulage. On ajoute au précédent mélange 0,3 g d'un catalyseur, par exemple du dilaurate de dibutylétain (DBTL). On ajoute ensuite 52 g de méthylènediphényldiisocyanate partiellement polymérisé.

L'étalement de la composition réactive, sur le joint surmoulé, s'effectue à l'aide d'un feutre. Après étalement, on polymérise par un chauffage dans une enceinte à 120°C qui procure une température de peau d'environ 85°C durant 5 minutes environ. L'épaisseur de la couche déposée est d'environ 15 à 20 µm.

Le vitrage encapsulé finalement obtenu est apte à la pose par collage dans une baie de carrosserie. Cette aptitude au collage se conserve même après un long stockage du vitrage. Le cordon adhésif utilisé pour le collage peut être tout cordon adhésif utilisé pour le collage direct du verre ou d'une bordure émaillée à la baie de carrosserie. On peut citer par exemple un cordon ou mastic en polyuréthane à deux composants ou un cordon ou mastic en polyuréthane à un composant durcissable à l'humidité.

L'adhésion obtenue entre le profil surmoulé du vitrage et le cordon adhésif est solide et durable.

Cette adhésion peut être évaluée à l'aide d'un test de pelage sur une éprouvette constituée d'une languette du matériau formant le profil d'encapsulation, de 2 cm de large sur laquelle on a déposé et fait durcir par polymérisation le cordon adhésif de même largeur utilisé pour le montage par collage des vitrages dans la baie de carrosserie. Le cordon adhésif utilisé est un joint commercialisé sous l'appellation BETASEAL HV3. Le cordon adhésif est déposé sur le profil surmoulé traité selon l'invention, dans un cas juste après le traitement et dans l'autre cas 7 jours après.

Les mesures d'adhésion par pelage à 180° des éprouvettes sont pratiquées juste après le durcissement dans les conditions normales du mastic de collage, qui est ici de 7 jours.

L'adhésion obtenu est Ho. On mesure aussi l'adhésion après 7 jours supplémentaires dans des conditions de cataplasme humide, conditions connues selon la méthode d'essai RENAULT 1165 H7.

On recherche généralement une rupture cohésive du cordon adhésif, et avec des valeurs au moins égales à 60 N/cm pour H_{O} et au moins égales à 40 N/cm pour H₇.

Les valeurs mesurées pour l'exemple 1 sont :
- H_{O} = 94 à 110 N/cm
- H₇ = 65 N/cm en moyenne avec une rupture cohésive du cordon de collage.

### Exemples comparatifs

On fabrique un vitrage surmoulé comme dans l'exemple 1. Mais après le démoulage du vitrage encapsulé, on ne procède qu'au prétraitement de la face du profil à coller, avec un ou plusieurs solvants comme décrits ci-après, c'est-à-dire sans traitement de la face à l'aide d'une composition réactive.

### Exemple comparatif 1

On nettoie plusieurs fois la face avec du trichlo-1,1,1- éthane. Les valeurs obtenues mesurées dans les conditions décrites précédemment sont H_{O} = 22 N/cm avec une rupture adhésive.

### Exemple comparatif 2

On nettoie la face avec du pentane. La valeur H_{O} obtenue est de 23 N/cm avec une rupture adhésive.

### Exemple comparatif 3

On nettoie la face avec du white-spirit. La valeur H_{O} obtenue est de 12 N/cm avec une rupture adhésive.

### Exemple comparatif 4

On nettoie la face avec un mélange en parties égales de dichlorométhane, d'acétone, de THF et d'oxyde de butylène. La valeur H_{O} obtenue est de 16 N/cm avec une rupture adhésive.

Les valeurs obtenus après le traitement uniquement avec un solvant ou un mélange de solvant ne sont donc pas satisfaisantes.

### Exemple 2

On opère comme dans l'exemple 1, sauf qu'on ne traite pas au préalable le profil surmoulé avec un solvant, mais on le traite uniquement avec la composition réactive selon l'exemple 1. Après un chauffage de 5 minutes à 120°C, on obtient une valeur H_{O} généralement meilleure qu'avec un traitement uniquement avec un solvant, mais très dispersée selon les échantillons, entre 20 et 65 N/cm.

Le type de rupture varie selon les échantillons de la rupture adhésive à la rupture cohésive.

### Exemple 3

On opère comme dans l'exemple 1, sauf que l'on traite au préalable le profil surmoulé avec du pentane. On obtient une valeur H_{O} = 60 et H₇ comprise entre 20 et 45 N/cm. La rupture varie d'une rupture adhésive à une rupture cohésive selon les échantillons.

Le prétraitement avec le pentane est moins performant qu'avec un solvant chloré.

### Exemple 4

On opère comme dans l'exemple 1, sauf qu'on nettoie au préalable le profil surmoulé avec du dichlorométhane. Les valeurs d'adhésion obtenues sont H_{O} = 100 N/cm et H₇ = 48 N/cm, avec une rupture cohésive du cordon de collage.

### Exemple 5

On opère comme dans l'exemple 1, sauf que l'on traite le profil surmoulé avec une composition réactive à base d'une résine époxyde à deux composants, à savoir une résine commercialisée sous l'appellation EPIKOTE 928, par la société SHELL, à raison d'une partie, et une résine commercialisée sous l'appellation QUICK CURE 195 X, par la société CRAY-VALLEY, à raison de deux parties, en solution dans l'éthylméthylcétone.

On fait polymériser la résine par un traitement thermique de 10 minutes à 100°C. L'épaisseur de la couche déposée varie entre 15 et 20 µm. Les valeurs d'adhésion obtenues sont les suivantes : H_{O} égal à 96 N/cm et H₇ égal à 50 N/cm.

### Exemple 6

On opère comme dans l'exemple 5, sauf qu'on ne traite pas au préalable le profil surmoulé avec un solvant, mais on le traitement uniquement avec la composition réactive selon l'exemple 5.

Les valeurs d'adhésion mesurées sont : H_{O} compris entre 15 et 65 N/cm selon les échantillons, ce qui est généralement insuffisant.

### Exemple 7

On opère comme dans l'exemple 5, sauf que l'on traite au préalable le profil surmoulé avec du pentane. Les valeurs d'adhésion obtenues sont : H_{O} égal à 80 N/cm et H₇ égal à 40 N/cm avec une rupture cohésive.

### Exemple 8

On opère comme dans l'exemple 5, sauf que l'on traite au préalable le profil surmoulé avec du dichlorométhane.

Les valeurs d'adhésion obtenues sont : H_{O} égal à 90 N/cm et H₇ égal à 60 N/cm avec une rupture cohésive.

### Exemple 9

On opère comme dans l'exemple 1, sauf qu'on modifie le composant polyol en utilisant uniquement pour ce composant un polytétraméthylèneglycol de masse moléculaire 650, le rapport des groupements NCO/OH étant toujours de 0,8.

Les valeurs d'adhésion obtenues sont : H_{O} égal à 70 N/cm et H₇ égal à 40 N/cm avec une rupture cohésive.

### Exemple 10

On opère comme dans l'exemple 1, sauf qu'on utilise en tant que composant polyol, un polyol de fonctionnalité supérieure à 2, à savoir un polypropylèneglycol de fonctionnalité 3 et d'une masse moléculaire d'environ 550.

Les valeurs d'adhésion obtenues sont : H_{O} égal à 75 N/cm et H₇ égal à 45 N/cm avec une rupture cohésive.

### Exemple 11

On opère comme dans l'exemple 1, avec les mêmes composants, sauf qu'on modifie le rapport entre eux pour avoir un rapport NCO/OH de 0,4.

Les valeurs d'adhésion obtenues sont : H_{O} égal à 60 N/cm et H₇ égal à 60 N/cm.

### Exemple 12

On opère comme dans l'exemple 1, sauf qu'on modifie le rapport des composants pour avoir un rapport NCO/OH de 0,95.

Les valeurs d'adhésion obtenues sont : H_{O} égal à 80 N/cm et H₇ égal à 55 N/cm.

### Exemple 13

On opère comme dans l'exemple 1, sauf qu'on modifie le rapport des composants pour avoir un rapport NCO/OH de 0,99.

Les valeurs d'adhésion obtenues sont : H_{O} égal à 75 N/cm et H₇ égal à 55 N/cm.

### Exemple comparatif 5

On opère comme dans l'exemple 1, sauf qu'on modifie le rapport des composants pour avoir un rapport NCO/OH de 1.

Lorsqu'on dépose le cordon adhésif juste après le traitement du profil d'encapsulation, les valeurs d'adhésion obtenues H_{O} et H₇ sont satisfaisantes. En revanche, lorsque le cordon adhésif est déposé 7 jours après le traitement, comme dans les autres exemples, on obtient une valeur H_{O} satisfaisante, mais H₇ est insuffisant en étant égal à 10-15 N/cm. L'adhésion ne se conserve pas dans le temps.

### Exemple comparatif 6

On opère comme dans l'exemple 1, sauf qu'on modifie le rapport des composants pour avoir un rapport NCO/OH de 1,1.

De même que pour l'exemple comparatif 5, l'adhésion ne se conserve pas dans le temps lorsque le cordon adhésif est déposé après 24 heures seulement sur le profil surmoulé.

### Exemple comparatif 7

On opère comme dans l'exemple 1, sauf qu'on effectue aucun traitement sur le profil d'encapsulation. La valeur H_{O} obtenue est de 10 N/cm seulement.

### Exemple 14

On fabrique un vitrage encapsulé par le procédé de moulage par injection thermoplastique d'un polyuréthane connu pour ce type d'application.

On opère ensuite comme dans l'exemple 1.

Les valeurs d'adhésion obtenues sont H_{O} égal à 70 et H₇ égal à 60 avec une rupture cohésive.

### Exemple 15

On opère comme dans l'exemple 1, sauf qu'on remplace le traitement thermique de polymérisation de la composition déposée sur le profil surmoulé par une polymérisation dite à l'ambiante, consistant à laisser la composition réagir sur le vitrage 24 heures à 23°C.

Les valeurs d'adhésion obtenues sont H_{O} égal à 90 N/cm et H₇ égal à 60 N/cm.

## Revendications

1. Procédé pour la fabrication d'un vitrage monolithique ou feuilleté muni d'un profil périphérique surmoulé destiné à être monté par collage dans une baie, caractérisé en ce que juste après la fabrication du profil surmoulé sur le vitrage, au moins la face du profil destinée à être collée est traitée à l'aide d'une composition réactive comprenant des monomères, prépolymères ou résine(s), formant après polymérisation au moins partielle sur ladite face une couche comportant des groupes OH libres stables susceptibles de réagir ultérieurement avec le cordon adhésif utilisé pour le montage par collage du vitrage dans la baie.

2. Procédé selon la revendication 1, caractérisé en ce qu'on polymérise la couche comportant les groupes OH au moins partiellement par un traitement thermique.

3. Procédé selon la revendication 1, caractérisé en ce qu'on polymérise la couche comportant les groupes OH au moins partiellement à température ambiante.

4. Procédé selon l'une des revendications 1 à 3, caractérisé en ce que la composition réactive comprend un excès de groupes OH stables.

5. Procédé selon l'une des revendications 1 à 4, caractérisé en ce que la composition réactive comprend essentiellement des composants susceptibles de former un polyuréthane à groupe OH libres, le composant polyol étant pris en excès par rapport au composant isocyanate.

6. Procédé selon la revendication 5, caractérisé en ce que la composition réactive est formée à partir d'un composant isocyanate et d'un composant polyol, le rapport des groupes NCO aux groupes OH étant inférieur à 1 et, de préférence, compris entre 0,3 et 0,99.

7. Procédé selon la revendication 6, caractérisé en ce que le composant polyol comprend un polyol long et un diol court.

8. Procédé selon l'une des revendications 6 ou 7, caractérisé en ce que le composant polyol comprend un polyol de fonctionnalité supérieure à 2.

9. Procédé selon l'une des revendications 5 à 8, caractérisé en ce que le composant polyuréthane est à base de méthylènediphényldiisocyanate.

10. Procédé selon l'une des revendications 1 à 4, caractérisé en ce que la composition réactive comprend essentiellement des composants susceptibles de former une résine époxyde à groupes OH libres.

11. Procédé selon l'une des revendications 1 à 4, caractérisé en ce que la composition réactive est à base d'une résine polyoxasolidone obtenue par condensation d'un isocyanate sur une résine époxyde en excès en présence d'un catalyseur de type sel d'ammonium quaternaire.

12. Procédé selon l'une des revendications précédentes, caractérisé en ce qu'avant le traitement à l'aide de la composition réactive, on traite au préalable au moins une fois la face du profil surmoulé avec un solvant.

13. Procédé selon la revendication 12, caractérisé en ce que le solvant est choisi parmi les solvants chlorés, l'acétone, le tétrahydrofurane.

14. Vitrage monolithique ou feuilleté muni d'un profil périphérique surmoulé destiné à être monté par collage dans une baie et obtenu par le procédé selon l'une des revendications précédentes, caractérisé en ce que le profil surmoulé présente au moins une face traitée à l'aide d'une composition réactive comprenant des monomères, prépolymères ou résine(s) formant, après polymérisation au moins partielle, sur ladite face une couche comportant des groupes OH libres stables susceptibles de réagir ultérieurement avec le cordon adhésif utilisé pour le montage par collage du vitrage dans ladite baie.

15. Vitrage selon la revendication 14, caractérisé en ce que la couche comportant les groupes OH formée sur la face traitée du profil surmoulé présente une épaisseur d'environ 15 à 20 micromètres.

## Claims

1. Process for the production of a monolithic or laminated glass plate provided with a potted peripheral profile for fitting by adhesion in a window opening, characterized in that following the production of the potted profile on the glass plate, at least the face of the profile which is to be bonded is treated with the aid of a reactive composition incorporating monomers, prepolymers or resin(s), forming after at least partial polymerization on said face a layer incorporating stable, free OH groups able to subsequently react with the adhesive bead used for fitting by adhesion of the glass plate in the window opening.

2. Process according to claim 1, characterized in that the layer incorporating the OH groups is at least partly polymerized by a heat treatment.

3. Process according to claim 1, characterized in that the layer incorporating the OH groups is at least partly polymerized at ambient temperature.

4. Process according to any one of the claims 1 to 3, characterized in that the reactive composition has an excess of stable OH groups.

5. Process according to one of the claims 1 to 4, characterized in that the reactive composition essentially has components able to form a polyurethane with free OH groups, the polyol component being in excess compared with the isocyanate component.

6. Process according to claim 5, characterized in that the reactive composition is formed from an isocyanate component and a polyol component, the ratio of the NCO groups to the OH groups being below 1 and preferably between 0.3 and 0.99.

7. Process according to claim 6, characterized in that the polyol component has a long polyol and a short diol.

8. Process according to either of the claims 6 and 7, characterized in that the polyol component has a polyol with a functionality higher than 2.

9. Process according to one of the claims 5 to 8, characterized in that the polyurethane component is based on methylene diphenyl diisocyanate.

10. Process according to one of the claims 1 to 4, characterized in that the reactive composition essentially has components able to form an epoxy resin with free OH groups.

11. Process according to one of the claims 1 to 4, characterized in that the reactive composition is based on a polyoxasolidone resin obtained by the condensation of an isocyanate on an epoxy resin in excess in the presence of a catalyst of the quaternary ammonium salt type.

12. Process according to any one of the preceding claims, characterized in that prior to the treatment with the aid of the reactive composition, the face of the potted profile is treated at least once with a solvent.

13. Process according to claim 12, characterized in that the solvent is chosen from among chlorinated solvents, acetone and tetrahydrofuran.

14. Monolithic or laminated glass plate provided with a potted peripheral profile to be fitted by adhesion in a window opening and obtained by the process according to any one of the preceding claims, characterized in that the potted profile has at least one face treated with the aid of a reactive composition comprising monomers, prepolymers or resin(s) forming, after at least partial polymerization, on said face a layer having free, stable OH groups able to subsequently react with the adhesive bead used for the fitting by adhesion of the glass plate in said window opening.

15. Glass plate according to claim 14, characterized in that the layer incorporating the OH groups formed on the treated face of the potted profile has a thickness of approximately 15 to 20 micrometres.

## Patentansprüche

1. Verfahren zur Herstellung einer einschichtigen oder Verbundverglasung, die mit einem aufgeformten Umfangsprofil ausgestattet und vorgesehen ist, durch Kleben in eine Öffnung eingebaut zu werden, **dadurch gekennzeichnet, daß** unmittelbar nach Erzeugung des aufgeformten Profils auf der Verglasung wenigstens die zum Einkleben bestimmte Seite des Profils mit einer reaktiven Zusammensetzung behandelt wird, die Monomere, Präpolymere oder Harz/e umfaßt und nach wenigstens teilweiser Polymerisation auf dieser Seite eine Schicht bildet, die stabile freie OH-Gruppen enthält, welche später mit dem Klebeband reagieren können, das zum Einbau der Verglasung in die Öffnung durch Kleben verwendet wird.

2. Verfahren nach Anspruch 1, **dadurch gekennzeichnet, daß** die die OH-Gruppen enthaltende Schicht wenigstens teilweise durch eine thermische Behandlung polymerisiert wird.

3. Verfahren nach Anspruch 1, **dadurch gekennzeichnet, daß** die die OH-Gruppen enthaltende Schicht wenigstens teilweise bei Umgebungstemperatur polymerisiert wird.

4. Verfahren nach einem der Ansprüche 1 bis 3, **dadurch gekennzeichnet, daß** die reaktive Zusammensetzung einen Überschuß an stabilen OH-Gruppen enthält.

5. Verfahren nach einem der Ansprüche 1 bis 4, **dadurch gekennzeichnet, daß** die reaktive Zusammensetzung im wesentlichen Komponenten enthält, welche ein Polyurethan mit freien OH-Gruppen bilden können, wobei die Polyolkomponente in bezug auf die Isocyanatkomponente im Überschuß eingesetzt wird.

6. Verfahren nach Anspruch 5, **dadurch gekennzeichnet, daß** die reaktive Zusammensetzung ausgehend von einer Isocyanat- und einer Polyolkomponente gebildet wird, wobei das Verhältnis der NCO-Gruppen zu den OH-Gruppen kleiner als 1 und vorzugsweise zwischen 0,3 und 0,99 ist.

7. Verfahren nach Anspruch 6, **dadurch gekennzeichnet, daß** die Polyolkomponente ein langes Polyol und ein kurzes Diol enthält.

8. Verfahren nach Anspruch 6 oder 7, **dadurch gekennzeichnet, daß** die Polyolkomponente ein Polyol mit einer Funktionalität von größer als 2 enthält.

9. Verfahren nach einem der Ansprüche 5 bis 8, **dadurch gekennzeichnet, daß** die Polyurethankomponente Methylendiphenyldiisocyanat als Grundlage hat.

10. Verfahren nach einem der Ansprüche 1 bis 4, **dadurch gekennzeichnet, daß** die reaktive Zusammensetzung im wesentlichen Komponenten enthält, die ein Epoxidharz mit freien OH-Gruppen bilden können.

11. Verfahren nach einem der Ansprüche 1 bis 4, **dadurch gekennzeichnet, daß** die reaktive Zusammensetzung ein Polyoxasolidonharz zur Grundlage hat, das durch Kondensation eines Isocyanates mit einem im Überschuß vorhandenen Epoxidharz in Gegenwart eines Katalysators vom Typ eines quartären Ammoniumsalzes erhalten worden ist.

12. Verfahren nach einem der vorhergehenden Ansprüche, **dadurch gekennzeichnet, daß** man die Seite des aufgeformten Profils vor der Behandlung mit der reaktiven Zusammensetzung wenigstens ein Mal mit einem Lösungsmittel behandelt.

13. Verfahren nach Anspruch 12, **dadurch gekennzeichnet, daß** das Lösungsmittel aus den chlorierten Lösungsmitteln, Aceton und Tetrahydrofuran ausgewählt ist.

14. Einschichtige oder Verbundverglasung, die mit einem aufgeformten Umfangsprofil ausgestattet, vorgesehen, durch Kleben in eine Öffnung eingebaut zu werden und gemäß dem Verfahren nach einem der vorhergehenden Ansprüche hergestellt ist, **dadurch gekennzeichnet, daß** das aufgeformte Profil wenigstens eine Seite besitzt, welche mit einer reaktiven Zusammensetzung behandelt ist, die Monomere, Präpolymere oder Harz/e umfaßt und nach wenigstens teilweiser Polymerisation auf dieser Seite eine Schicht bildet, die stabile freie OH-Gruppen enthält, welche später mit dem Klebeband reagieren können, das zum Einbau der Verglasung in die Öffnung durch Kleben verwendet wird.

15. Verglasung nach Anspruch 14, **dadurch gekennzeichnet, daß** die die OH-Gruppen enthaltende Schicht, welche auf der behandelten Seite des aufgeformten Profils gebildet wird, eine Dicke von etwa 15 bis 20 Mikrometern aufweist.
